# EUROPÄISCHE PATENTSCHRIFT

(11) **EP 0 694 428 B1**
(45) Veröffentlichungstag und Bekanntmachung des Hinweises auf die Patenterteilung: **20.01.1999**
(21) Anmeldenummer: 95108568.7
(22) Anmeldetag: 03.06.1995
(51) Int. Cl.: B60J 10/00, B60J 10/08

(54) **Dichtungsanordnung und ein dafür hergerichtetes Dichtelement**
Sealing arrangement and sealing element inserted therein
Dispositif d'étanchéité et élément d'étanchéité dans lequel est monté un élément d'étanchéité

(30) Priorität: 25.07.1994 DE 4426324
(43) Veröffentlichungstag der Anmeldung: 31.01.1996
(73) Patentinhaber: Volkswagen Aktiengesellschaft, 38436 Wolfsburg (DE)
(72) Erfinder: Garms, Torsten, Dipl.-Ing., D-38102 Braunschweig (DE); Rodermund, Wilfried, Dipl.-Ing., D-38461 Danndorf (DE)

(56) Entgegenhaltungen:
- EP-A- 0 428 349
- EP-A- 0 483 758
- DE-A- 2 401 465
- US-A- 4 945 681
- PATENT ABSTRACTS OF JAPAN vol. 14, no. 540 (M-1053) 29. November 1990 & JP-A-02 227 327 (KINUGAWA RUBBER) 10. September 1990
- PATENT ABSTRACTS OF JAPAN vol. 10, no. 281 (M-520) (2337) 25. September 1986 & JP-A-61 102 311 (TOKAI KOGYO) 21. Mai 1986
- PATENT ABSTRACTS OF JAPAN vol. 15, no. 61 (M-1081) 13. Februar 1991 & JP-A-02 290 755 (TOYODA GOSEI) 30. November 1990

## Beschreibung

Die Erfindung betrifft eine Dichtungsanordnung gemäß dem Oberbegriff des Patentanspruchs 1 sowie ein dafür hergerichtetes Dichtelement.

Gattungsgemäße Dichtungsanordnungen sind insbesondere im Kraftfahrzeugbau hinlänglich bekannt. So zeigt beispielsweise die EP-0 428 349-B1 (B60J 10/08) eine Kraftfahrzeugtür, an der ein elastisches Dichtelement mittels einer Klemmverbindung gehalten ist. Die Geometrie dieses Dichtelementes ist so bemessen, daß beim Verschließen der Tür das Dichtelement unter Vorspannung an einer Vertiefung im Fahrzeugaufbau zur Anlage kommt. Damit ist der Spalt zwischen Tür und Fahrzeugaufbau wirkungsvoll verschlossen. Die in der o. g. Schrift gezeigte Dichtungsanordnung ist aber nicht in solchen Deckeln einsetzbar, die einen hohlen Grundkörper mit Flüssigkeitsablauf aufweisen. Für letztere ist es bekannt, am Randbereich des Grundkörpers Dichtelemente mit bandförmigem Querschnitt zu befestigen, die die Umrißlinie des Deckels überragend direkt auf einer Vertiefung des Blechkörpers, also beispielsweise innerhalb eines Türrahmens, zur Anlage gebracht werden. Bei derartigen Dichtungen besteht das Problem, daß insbesondere aufgrund der leichten Unterdruckbildung während der Fahrt eines Fahrzeuges unerwünschte Substanzen wie Staub, Schmutz oder Aerosole durch die Flüssigkeitsablauföffnung hindurch in den Innenraum des Grundkörpers hineingelangen können.

Aus der DE-A-2 401 465 ist ein Dichtelement bekannt, mit dem eine Tür gegenüber einer Wand abdichtbar ist. Dieses Dichtelement zeigt im wesentlichen ein zur Befestigung an einem Deckel hergerichtetes Klotzprofil, an das sich ein Schlauchprofil anschließt. Dieses Schlauchprofil ist auf dem der Deckel zugewandten Seite mit Sollknickstellen nach Art eines Faltenbalges ausgeführt und weist auf der gegenüberliegenden - der Karosserie zugewandten Seite - eine angeformte Lippe auf. Die dichtende Beaufschlagung eines an einem hohlen Grundkörper des Deckels abgestellten Flansches ist dort nicht offenbart.

Der Erfindung liegt die Aufgabe zugrunde, eine Dichtungsanordung und ein dafür hergerichtetes Dichtelement bereitzustellen, mit dem bei gattungsgemäßen Dichtungsanordnungen und darin eingesetzten Dichtelementen die oben beschriebenen Nachteile vermieden werden können.

Diese Aufgabe wird für Dichtungsanordnungen gelöst gemäß den Merkmalen des Patentanspruchs 1. Weiter gelöst wird diese Aufgabe durch Dichtelemente gemäß den Ansprüchen 8 und 14. Die auf die vorstehend genannten Ansprüche jeweils rückbezogenen Unteransprüche betreffen besonders vorteilhafte Weiterbildungen der Erfindung.

Wesentlicher Bestandteil der erfindungsgemäßen Dichtungsanordnung ist also ein Dichtelement, dessen Querschnitt im wesentlichen L-förmig ausgebildet ist, und das im unverformten Zustand einen vom Grundkörper abgestellten Flansch nicht berührt. Für den bevorzugten Anwendungsfall in einem Kraftfahrzeug hat dies zur Folge, daß bei geöffneter Tür evtl. in dieser vorhandene Flüssigkeit ungehindert ablaufen kann. Bei geschlossener Tür liegt das am Grundkörper befestigte Dichtelement auch am abgestellten Flansch an und bildet so im Bereich der Flüssigkeitsablauföffnung einen dichten Kanal, durch den während der Fahrt Flüssigkeit seitlich aus der Tür heraustreten kann. Bei geschlossener Tür wird aber auch der Spalt zwischen dem Grundkörper und dem Blechkörper, also beispielsweise zwischen Fahrzeugtür und Türschweller, wirkungsvoll verschlossen. Während der Fahrt sind somit der Hohlraum innerhalb der Fahrzeugtür und der Fahrzeuginsassenraum gleichzeitig abgedichtet.

Das erfindungsgemäße Dichtelement weist eine unkomplizierte Geometrie auf und kann deshalb mit relativ einfach gestalteten Werkzeugen fertigungstechnisch problemlos mit guter Wirtschaftlichkeit hergestellt werden. Es ist außerdem an bereits vorhandenen Deckeln nachrüstbar, ohne daß an diesen oder im Bereich der Öffnung des Blechkörpers Konstruktionsänderungen notwendig werden. Die einfache Querschnittsgeometrie eröffnet darüber hinaus die Verwendung unterschiedlichster Befestigungsarten bezüglich der Anbindung an den Grundkörper. Bevorzugte Befestigungsarten sind Verbindungen mittels Clipsen, Klemmschienen, Verklebungen oder mittels Kombinationen der vorgenannten Verbindungsarten.

Ein vorteilhaftes Ausführungsbeispiel der Erfindung ist in der Zeichnung dargestellt. Für den bevorzugten Einsatz der Erfindung in einem Kraftfahrzeug zeigt
- Figur 1:: ausschnittsweise die Draufsicht auf eine Fahrzeugseitentür und
- Figur 2:: einen Schnitt II - II gemäß Figur 1,
- Figur 3:: eine Modifikation der in Figur 2 dargestellten Anordnung.

Gleiche Bauteile oder Bauteilabschnitte weisen in beiden Figuren die gleiche Bezifferung auf.

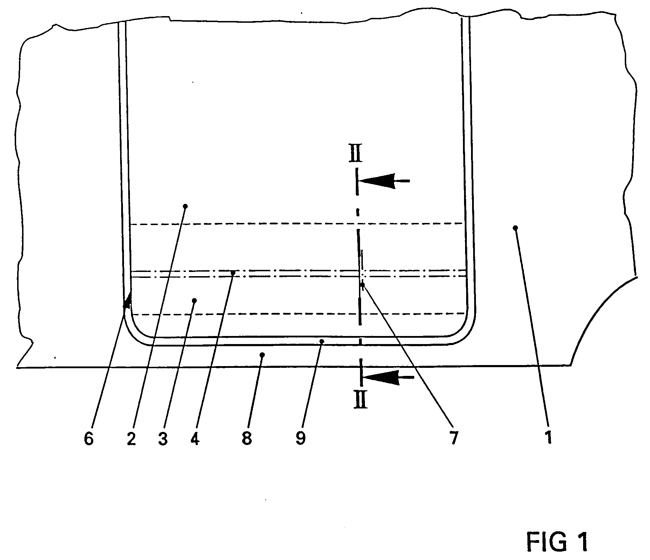

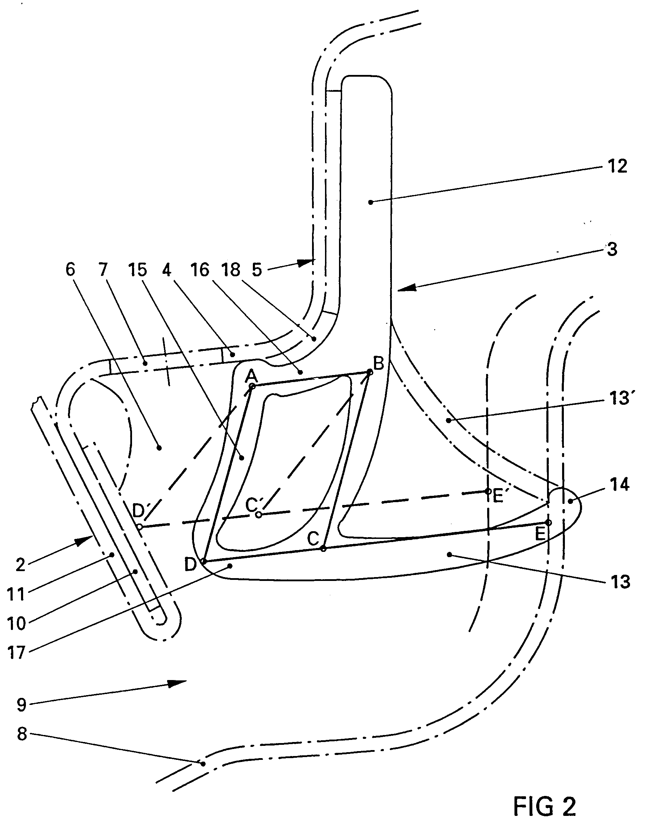

Figur 1 zeigt eine Karosserieseitenwand 1 und eine Fahrzeugtür 2, die im Sinne der Erfindung als Blechkörper bzw. Deckel aufzufassen sind. Mit Strichlinien angedeutet ist ein Dichtelement 3, das zusammen mit einer Bodenwand 4 eines Innenbleches 5 (siehe Figur 2) einen Kanal 6 bildet, sofern die Fahrzeugtür 2 fest verschlossen ist. Nur schematisch angedeutet ist ein Flüssigkeitsablauf 7, der durch eine Ausnehmung in der Bodenwand 4 gebildet ist. Die Funktion des Dichtelementes 3 im Hinblick auf die Abdichtung eines durch einen Türschweller 8 und die Fahrzeugtür 2 gebildeten Spaltes 9 wird anhand der Figur 2 näher beschrieben.

Von besonderer Bedeutung für die erfindungsgemäße Dichtungsanordnung ist ein gegenüber der Bodenwand 4 abgestellter Flansch 10, der hier von einem Außenblech 11 der Fahrzeugtür 2 umbördelt ist. Das Dichtelement 3 weist im wesentlichen einen ersten Schenkel 12 und einen zweiten Schenkel 13 auf. Letzterer kann - wie hier gezeigt - im Bereich seines freien Endes 14 aus Fertigungsgründen verdickt und in Richtung des ersten Schenkels 12 geneigt sein. Auf die Verdickung kann aber ggf. auch verzichtet werden. Zur Verstärkung des ersten Schenkels 12 ist hier ein Zusatzsteg 15 vorgesehen, der zusammen mit Verbindungsstegen 16 und 17 und einem unteren Bereich des ersten Schenkels 12 ein parallelogrammartiges Hohlprofil bildet. Durch dieses Hohlprofil wird mit verhältnismäßig geringem Materialaufwand eine hohe Verwindungssteifigkeit des Dichtelementes 3 im Übergangsbereich zwischen erstem Schenkel 12 und zweitem Schenkel 13 erzeugt. Diese Verwindungssteifigkeit ist sehr wichtig, damit einerseits zur Bildung des Kanals 6 und andererseits zur wirkungsvollen Abdichtungen des Spaltes 9 stets eine satte Auflage an der Fahrzeugtür 2 bzw. am Türschweller 8 gewährleistet ist. Alternativ zu dem dargestellten Dichtlippen-Prinzip für den zweiten Schenkel 13 kann auch ein mit fast T-förmigem Querschnitt ausgebildetes Schlauchprofil vorgesehen werden. Dies wird durch die Strichpunktlinie 13' in Figur 2 angedeutet. Besonders gute Dichtwirkungen wurden für Dichtelemente erzielt, bei denen das Dickenverhältnis vom ersten Schenkel 12 zum zweiten Schenkel 13 etwa 1,2 bis 1,8 beträgt. Bei der Materialwahl kann auch eine Mehrkomponentenherstellung in Betracht gezogen werden. So ist bei einem vorteilhaften Ausführungsbeispiel der erste Schenkel 12 in härterem Material gehalten als der Verbund aus Hohlprofil und zweitem Schenkel 13.

Die in der Figur 2 dargestellte Position nimmt das Dichtelement 3 dann ein, wenn die Fahrzeugtür 2 geöffnet ist. Nach dem Verschließen der Fahrzeugtür 2 wandern die mit den Buchstaben C bis E bezeichneten Kernpunkte des Dichtelementes 3 in die mit einem Strich bezeichneten Positionen. Mit Strichlinien schematisch angedeutet ist die Verschiebung eines Profils, das sich aus den Achsen des Zusatzsteges 15, des unteren Bereiches des ersten Schenkels 12 sowie des zweiten Schenkels 13 ergibt. Durch die Befestigung des Dichtelementes 3 - beispielsweise mittels Klebung, Clips und/oder in Klemmschienen - bleiben die Positionen der mit A und B gekennzeichneten Kernpositionen nahezu unverändert. Die Deformation des Dichtelementes 3 findet also nur in dessen unterem Bereich statt. Wichtig für die Gestaltung des Dichtelementes 3 ist auch eine Hohlkehle 18, die von dem Innenblech 5 beabstandet ist. Auf diese Weise kann der untere Bereich des Dichtelementes 3 ungehindert arbeiten, sobald der zweite Schenkel 13 beim Schließen der Fahrzeugtür 2 in Richtung Flansch 10 bewegt wird und damit das Dichtprofil an der Karosse zur Anlage kommt.

Die Neigung des freien Endes 14 zum ersten Schenkel 12 hin stellt sicher, daß das Dichtelement 3 gleichbleibend an dem Türschweller 8 zur Anlage gebracht werden kann. Eine Verkantung des zweiten Schenkels 13 nach unten kann auf diese Weise sicher ausgeschlossen werden. Durch eine Ausrichtung des zweiten Schenkels 13 innerhalb der Umrißlinie des den Flansch 10 umgebenden Außenblechs 11 kann verhindert werden, daß das Dichtelement 3 von außen im Bereich des Spaltes 9 sichtbar ist. Es ist aber unter Umständen auch denkbar, zur Erzeugung besonderer Designeffekte den zweiten Schenkel 13 in Richtung Türschweller zu neigen.

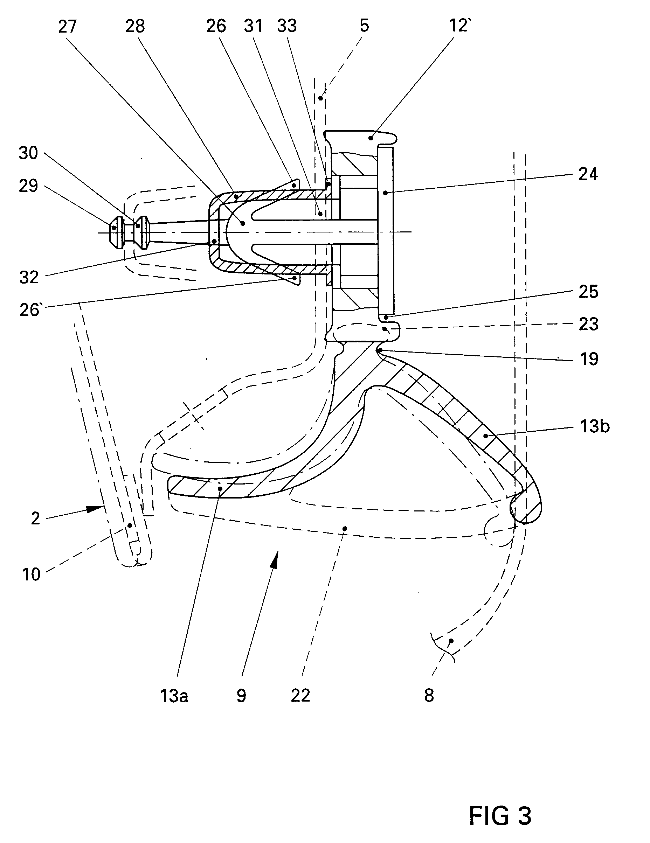

Eine Abwandlung des in Figur 2 dargestellten Dichtelementes 3 zeigt Figur 3. Ein dort mit 3' bezeichnetes Dichtelement weist als wesentliche Bestandteile einen Schaftteil 12' aus einem im wesentlichen formstabilen Werkstoff und Schenkelteile 13a, 13b aus einem weichelastischen Werkstoff auf. Als weichelastischer Werkstoff kann beispielsweise ein sogenanntes EPDM-Material oder Zellkautschuk - also sogenanntes Moosgummi - verwendet werden. Für das im wesentlichen formbeständige Schaftteil 12' kommen Werkstoffe wie PVC, Polyamid oder Polypropylen in Frage. In einem bevorzugten Herstellungsverfahren werden das Schaftteil 12' und die Schenkelteile 13a, 13b als Koextrudat hergestellt, also in einem gemeinsamen Werkzeug aneinandergeformt. Von besonderer Bedeutung ist dabei ein Sollknickbereich 19, der die Beweglichkeit der Schenkelteile 13a, 13b gegenüber dem Schaffteil 12' in definierter Weise sicherstellt. Bei jedem Schließvorgang der Tür wird auf diese Weise erreicht, daß freie Enden 20, 21 der Schenkelteile 13a, 13b jeweils im Bereich des Flansches 10 bzw. am Türschweller 8 zur Auflage gebracht werden. Je nach fahrzeugspezifischen Einbauverhältnissen kann zwischen den freien Enden 20, 21 auch ein ebenfalls weichelastischer Verbindungssteg 22 (mit punktierten Linie dargestellt) vorgesehen werden. Der gesamte weichelastische Bereich erhält damit einen schlauchartigen Charakter.

Die Anbindung des weichelastischen Bereiches an das Schaftteil 12' kann nicht nur durch Anspritzung erfolgen, sondern gegebenenfalls auch mittels einer form- oder reibschlüssigen Anbindung in einer Haltenut 23 (ebenfalls punktiert angedeutet). Zur Befestigung des gesamten Dichtelementes 3' an dem Innenblech 5 ist hier in dem Schaftteil 12' eine von einem Clipskörper 24 durchdrungene Öffnung 25 vorgesehen. An dem Clipskörper 24 sind Klemmnasen 26, 26' angeformt, die im unverspannten Zustand von einem Zentralteil 27 des Clipskörpers 24 abstehen. In dieser sogenannten Vormontagelage der Klemmnasen 26, 26' befindet sich eine Klemmhülse 28 zunächst in der gestrichelt dargestellten Position, und zwar arretiert zwischen zwei Rastnasen 29, 30 am freien Ende des Zentralteils 27. Der im Rahmen einer Vormontage in die Ausnehmung 25 eingelegte Clipskörper 24 wird zusammen mit der Klemmhülse 28 in eine Ausnehmung 31 des Innenbleches 5 mit sanftem Handdruck eingefädelt. Durch die leicht angeschrägte Gestaltung der Klemmhülse 28 im Bodenbereich erfolgt eine selbständige Zentrierung. Die endgültige Arretierung mit Anlage eines umlaufenden Flansches 33 am Innenblech 5 wird durch verstärkten Handdruck erreicht. Dabei durchstößt die Rastnase 30 eine Öffnung 32 im Boden der Klemmhülse 28. Das Zentralteil 27 kann damit in den Innenbereich der Fahrzeugtür 2 eintauchen. Die Klemmnasen 26, 26' werden durch die zylindrischen Wandungen der Klemmhülse 28 unter Vorspannung gesetzt und beulen den relativ weichen Kunststoffmantel der Klemmhülse 28 unterhalb des Innenbleches 5 zumindest so weit aus, daß die Ausnehmung 5 in einer das Zentralteil 27 arretierenden Weise hintergriffen wird. Damit ist auch das Schaftteil 12' eindeutig festgelegt. Die Klemmhülse 28 ist hier tüllenartig ausgebildet und dichtet die Öffnung 31 wasser- und luftdicht ab.

Als Geometrie für den Kopfbereich des Clipskörpers 24 können Oval- oder Kreisformen vorgesehen werden. Als Haltemittel zu Befestigung des Schaftteils 12' können alternativ zu den in der Zeichnung dargestellten Ausführungsbeispielen auch direkt an dem Schaftteil 12' angeformte Steckelemente mit Tannenbaumzapfenprofil oder Spreizclips vorgesehen werden.

Besonders vorteilhaft ist auch bei dem in der Zeichnung dargestellten Dichtelement 3' die gleichsinnige Krümmung der Schenkelteile 13a und 13b. Diese gleichsinnige Krümmung sorgt dafür, daß bei Verschwenkung um den Sollknickbereich 19 sowohl im Bereich des Flansches 10 als auch am Türschweller 8 ein gleichmäßiges Dichtverhalten erzeugt wird.

Der Einsatz des erfindungsgemäßen Dichtelementes 3 bzw. 3' ist nicht auf Türen von Kraftfahrzeuge beschränkt. Vorstellbar ist auch eine Verwendung bei Kofferraumklappen oder Motorhauben sowie in Flugzeugen oder Schiffen. Einsatzmöglichkeiten sind auch bei Containern gegeben, deren Seitenwände einen Hohlraum aufweisen und in denen Verschlußdeckel angeordnet ist.

## Patentansprüche

1. Dichtungsanordnung für eine durch einen Deckel (2) verschließbare Öffnung eines Blechkörpers (1), der im Randbereich der Öffnung eine Vertiefung aufweist, an der entlang wenigstens eines Abschnittes ein von einem hohlen Grundkörper des Deckels (2) abgestellter Flansch (10) über ein Dichtelement (3) zur Anlage bringbar ist, dadurch gekennzeichnet, daß das Dichtelement (3)
- einen im wesentlichen L-förmigen Querschnitt aufweist,
- bei nicht arretiertem Deckel (2) im unverformten Zustand den Flansch (10) nicht berührend am Grundkörper befestigt ist,
- bei in dem Blechkörper (1) arretiertem Deckel (2) unter elastischer Verformung eine von dem Flansch (10) zu dem Blechkörper (1, 8) reichende Ausdehnung aufweist.

2. Dichtungsanordnung nach Anspruch 1, dadurch gekennzeichnet, daß der Blechkörper eine Fahrzeugkarosserie ist.

3. Dichtungsanordnung nach Anspruch 2, dadurch gekennzeichnet, daß der Deckel eine Fahrzeugtür (2) ist.

4. Dichtungsanordnung nach Anspruch 2, dadurch gekennzeichnet, daß der Deckel eine Kofferraumklappe ist.

5. Dichtungsanordnung nach Anspruch 2, dadurch gekennzeichnet, daß der Deckel eine Motorhaube ist.

6. Dichtungsanordnung nach Anspruch 3, dadurch gekennzeichnet, daß der Randbereich der Öffnung durch einen Türschweller (8) gebildet ist.

7. Dichtungsanordnung nach Anspruch 2, dadurch gekennzeichnet, daß in einer dem Flansch (10) zugewandten Bodenwand (4) des Grundkörpers ein Flüssigkeitsablauf (7) vorgesehen ist, der bei arretierter Fahrzeugtür (2) in einen von dieser und dem Dichtelement (3) gebildeten Kanal (6) mündet.

8. Dichtelement (3) zur Verwendung in einer Dichtungsanordnung gemäß Anspruch 1, dadurch gekennzeichnet, daß ein L-förmiger Querschnitt vorgesehen ist, bei dem ein erster zur Befestigung an einem Deckel (2) vorgesehener Schenkel (12) im Übergangsbereich zu einem zweiten Schenkel (13) eine Verstärkung (15) aufweist.

9. Dichtelement nach Anspruch 8, dadurch gekennzeichnet, daß die Verstärkung nach Art eines parallelogrammartigen Hohlprofils gebildet ist.

10. Dichtelement nach Anspruch 8, dadurch gekennzeichnet, daß der zweite Schenkel (13) zumindest im Bereich eines freien Endes (14) in Richtung des ersten Schenkels (12) geneigt ist.

11. Dichtelement nach Anspruch 8, dadurch gekennzeichnet, daß der zweite Schenkel (13) an einem freien Ende (14) verdickt ist.

12. Dichtelement nach Anspruch 8, dadurch gekennzeichnet, daß das Dickenverhältnis vom ersten Schenkel (12) zum zweiten Schenkel (13) 1,2 bis 1,8 beträgt.

13. Dichtelement nach Anspruch 8, dadurch gekennzeichnet, daß der erste Schenkel (12) durch ein Befestigungsmittel an dem Grundkörper eines Deckels (2) gehalten ist, und der zweite Schenkel (13) eine innerhalb der Umrißlinie eines Flansches (10) verlaufende Ausrichtung aufweist.

14. Dichtelement (3') zur Verwendung in einer Dichtungsanordnung gemäß Anspruch 1, dadurch gekennzeichnet, daß ein L-förmiger Querschnitt vorgesehen ist, der durch wenigstens ein zur Befestigung an einem Deckel (2) vorgesehenes Schaftteil (12') und durch wenigstens ein zur Beaufschlagung eines Flansches (10) vorgesehenes erstes Schenkelteil (13a) gebildet ist, und daß an dem im wesentlichen L-förmigen Querschnittsprofil wenigstens ein zur Beaufschlagung eines Blechkörpers (1) vorgesehenes zweites Schenkelteil (13b) angeformt ist.

## Claims

1. Sealing arrangement for an opening in a sheet-metal body (1), which can be closed by a cover (2), which body comprises an indentation in the edge region of the opening, along at least a portion of which a flange (10), which is positioned away from a hollow basic body of the cover (2), can be brought into position over a sealing element (3), characterised in that the sealing element (3)
- comprises a substantially L-shaped cross-section,
- is attached to the basic body while, in the non-deformed condition, not being in contact with the flange (10) when the cover (2) is not locked in position,
- is elongated under elastic deformation so as to reach from the flange (10) to the sheet-metal body (1, 8) when the cover (2) is locked in position in the sheet-metal body (1).

2. Sealing arrangement according to claim 1, characterised in that the sheet-metal body is a vehicle chassis.

3. Sealing arrangement according to claim 2, characterised in that the cover is a vehicle door (2).

4. Sealing arrangement according to claim 2, characterised in that the cover is vehicle boot lid.

5. Sealing arrangement according to claim 2, characterised in that the cover is a vehicle bonnet.

6. Sealing arrangement according to claim 3, characterised in that edge region of the opening is formed by a door sill (8).

7. Sealing arrangement according to claim 2, characterised in that a liquid run-off is provided in a bottom wall (4) of the basic body facing the flange (10), which run-off issues into a channel (6) formed by the vehicle door and the sealing element (3) when the vehicle door (2) is locked in position.

8. Sealing element (3) for use in a sealing arrangement in accordance with claim 1, characterised in that an L-shaped cross-section is provided, wherein a first limb (12) provided for attachment to a cover (2) comprises a reinforcement (15) in the region of the transition into a second limb (13).

9. Sealing element according to claim 8, characterised in that the reinforcement is formed as a type of parallelogram-like hollow profiled part.

10. Sealing element according to claim 8, characterised in that, at least in the region of one free end (14), the second limb (13) is inclined in the direction of the first limb (12).

11. Sealing element according to claim 8, characterised in that the second limb (13) is thickened at one free end (14).

12. Sealing element according to claim 8, characterised in that the thickness ratio of the first limb (12) to the second limb (13) amounts to 1.2 to 1.8.

13. Sealing element according to claim 8, characterised in that the first limb (12) is held on the basic body of a cover (2) by an attachment means, and the second limb (13) is aligned so as to extend inside the contour of a flange (10).

14. Sealing element (3') for use in a sealing arrangement in accordance with claim 1, characterised in that an L-shaped cross-section is provided which is formed by at least one shaft part (12') provided for attachment to a cover (2) and by at least one first limb part (13a) provided to act upon a flange (10), and that at least one second limb part (13b) provided to act upon a sheet-metal body (1) is integrally formed on the substantially L-shaped cross-sectional profile.

## Revendications

1. Dispositif d'étanchéité destiné à une ouverture d'un corps métallique (1) pouvant être fermée par un couvercle (2), comportant un renfoncement dans la zone de bord de l'ouverture, contre lequel une bride (10) disposée sur un corps creux du couvercle (2) peut être mise en application, au moins le long d'un tronçon, par l'intermédiaire d'un élément d'étanchéité (3),
caractérisé en ce que l'élément d'étanchéité (3)
- a une section transversale ayant sensiblement la forme d'un L,
- à l'état non déformé lorsque le couvercle (2) n'est pas bloqué, est fixé sur le corps de base en n'étant pas en contact avec la bride (10),
- lorsque le couvercle (2) est bloqué dans le corps métallique (1), présente sous déformation élastique une extension s'étendant de la bride (10) jusqu'au corps métallique (1, 8).

2. Dispositif d'étanchéité selon la revendication 1, caractérisé en ce que le corps métallique est une carrosserie de véhicule.

3. Dispositif d'étanchéité selon la revendication 2, caractérisé en ce que le couvercle est une portière (2) de véhicule.

4. Dispositif d'étanchéité selon la revendication 2, caractérisé en ce que le couvercle est un hayon de coffre à bagages.

5. Dispositif d'étanchéité selon la revendication 2, caractérisé en ce que le couvercle est un capot de moteur.

6. Dispositif d'étanchéité selon la revendication 3, caractérisé en ce que la zone de bord de l'ouverture est formée par un seuil (8) de la portière.

7. Dispositif d'étanchéité selon la revendication 2, caractérisé en ce qu'un écoulement de liquide (7) est prévu dans une paroi de fond (4) du corps de base orientée en direction de la bride (10) qui, lorsque la portière (2) de véhicule est bloquée, débouche dans un canal (6) formé par cette dernière et par l'élément d'étanchéité (3).

8. Elément d'étanchéité (3) destiné à être utilisé dans un dispositif d'étanchéité selon la revendication 1, caractérisé en ce qu'il est prévu une section transversale en forme de L, une première branche (12), prévue pour la fixation sur un couvercle (2), comportant un renforcement (15) dans la zone de transition vers une deuxième branche (13).

9. Elément d'étanchéité selon la revendication 8, caractérisé en ce que le renforcement est réalisé sous la forme d'un profilé creux de type parallélogramme.

10. Elément d'étanchéité selon la revendication 8, caractérisé en ce que la deuxième branche (13) est inclinée en direction de la première branche (12), au moins au niveau d'une extrémité libre (14).

11. Elément d'étanchéité selon la revendication 8, caractérisé en ce que la deuxième branche (13) est épaissie au niveau d'une extrémité libre (14).

12. Elément d'étanchéité selon la revendication 8, caractérisé en ce que le rapport d'épaisseur entre la première branche (12) et la deuxième branche (13) est de 1,2 à 1,8.

13. Elément d'étanchéité selon la revendication 8, caractérisé en ce que la première branche (12) est retenue sur le corps de base d'un couvercle (2) par un moyen de fixation, et en ce que la deuxième branche (13) présente une orientation s'étendant à l'intérieur de la ligne de contour d'une bride (10).

14. Elément d'étanchéité (3') destiné à être utilisé dans un dispositif d'étanchéité selon la revendication 1, caractérisé en ce qu'il est prévu une section transversale en forme de L formée par au moins un élément de tige (12'), qui est prévue pour la fixation sur un couvercle (2), et par au moins un premier élément de branche (13a) prévu pour une application contre une bride (10), et en ce qu'au moins un deuxième élément de branche (13b) est formé sur le profil de section transversale ayant sensiblement la forme d'un L, qui est prévu pour l'application contre un corps métallique (1).
